# EUROPEAN PATENT APPLICATION

(11) **EP 3 175 971 A1**
(43) Date of publication of application: **07.06.2017**
(21) Application number: 15828013.1
(22) Date of filing: 29.07.2015
(51) Int. Cl.: B29C 51/08, B21D 33/00, B29C 51/10, B65D 75/30, H01M 2/02

(54) **FILM MOLDED ARTICLE, FILM PACKAGED BODY USING SAME, MANUFACTURING METHOD FOR FILM MOLDED ARTICLE AND MANUFACTURING METHOD FOR FILM PACKAGED BODY**

(30) Priority: 29.07.2014 JP 2014153763; 23.03.2015 JP 2015059854
(71) Applicant: Sekisui Chemical Co., Ltd., Osaka-shi, Osaka 530-8565 (JP)
(72) Inventor: OGAWA Hiroshi, Tsukuba-shi Ibaraki 300-4292 (JP); NOGAMI Mitsuhide, Tsukuba-shi Ibaraki 300-4292 (JP); NAKATAKE Sumio, Kyoto-shi Kyoto 601-8105 (JP)
(74) Representative: Müller-Boré & Partner Patentanwälte PartG mbB
(86) International application number: PCT/JP2015/071501
(87) International publication number: WO 2016/017691

(57) **Abstract**

In a film molded article (1) of the present invention, a plurality of concave or convex embossed portions (3) disposed apart from each other are formed on a surface (2a) of a film (2), and the plurality of embossed portions (3) are disposed on the surface of the film (2) to form an enclosed region (4) surrounded by the plurality of embossed portions (3) and imaginary lines (4a) that connect the plurality of embossed portions (3).

## Description

### [Technical Field]

The present invention relates to a film molded article, a film packaged body using the same, a method of manufacturing a film molded article and a method of manufacturing a film packaged body.

Priority is claimed on Japanese Patent Application No. 2014-153763, filed July 29, 2014, and Japanese Patent Application No. 2015-059854 filed March 23, 2015, the content of which is incorporated herein by reference.

### [Background Art]

In the related art, for example, a film material including a laminate film, a metal foil or the like is used for packages of products such as cosmetics and an exterior body of a lithium ion secondary battery (for example, refer to Patent Literatures 1 and 2). When an object to be packaged, for example, cosmetics or a battery cell, is packaged using such a film material, a method in which such an object to be packaged is interposed between a pair of film materials and then peripheral portions of the film materials are sealed through adhesion or heat sealing under a reduced pressure environment is used.

In addition, as a method of manufacturing a film material for packaging a battery cell as an object to be packaged, for example, a method in which a film material is interposed between molds including a punch (a male mold) and a die (a female mold), and a concave portion for accommodating a battery cell is formed in advance is proposed (for example, refer to Patent Literature 3). As in the technology described in Patent Literature 3, when the concave portion is formed in the film material in advance, an effect of improving productivity when a battery cell is packaged with a film material is obtained. However, when a concave portion corresponding to properties of an overall shape, for example, a size of a battery cell, is formed to accommodate the battery cell as in Patent Literature 3, there is a problem in that a manufacturing cost increases since large manufacturing equipment such as a mold to be used is necessary.

### [Citation List]

### [Patent Literature]

[Patent Literature 1]
   Japanese Unexamined Patent Application, First Publication No. 2014-037261
[Patent Literature 2]
   Japanese Unexamined Patent Application, First Publication No. 2004-055171
[Patent Literature 3]
   Japanese Unexamined Patent Application, First Publication No. 2000-133216

### [Summary of Invention]

### [Technical Problem]

Here, when the object to be packaged described above is packaged, it is conceivable that a concave portion and the like are not formed in a film material, the object to be packaged is wrapped in a flat sheet state as it is, peripheral portions are sealed under a reduced pressure environment in this state, and thus a laminated film packaged body is formed, which is also investigated. In this manner, when the film material in the flat sheet state is used as it is to package the object to be packaged, there is no need to use large and expensive manufacturing equipment. In addition, it is possible to obtain an effect of improving productivity since a process of forming a concave portion corresponding to an overall shape of the object to be packaged can be omitted.

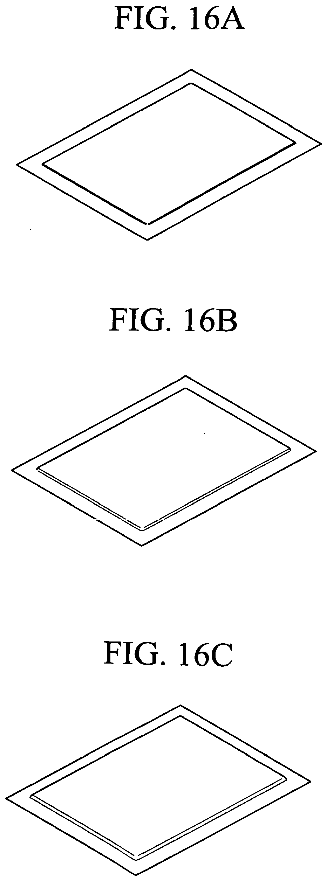

However, if a film material is used in a flat sheet state as it is to package an object to be packaged, for example, when vacuum suction is performed for laminate processing, wrinkles may be generated in the film material which originate from the vicinity of an edge of a portion for accommodating the object to be packaged. In particular, as a thickness of the object to be packaged increases, wrinkles are more likely to be formed (for example, refer to Fig. 16C). Since such wrinkles are formed to extend toward peripheral portions of the film material from the vicinity of the edge, air enters the wrinkle parts and thus there is a possibility of sealability deteriorating. In this manner, when sealability of the film material deteriorates, for example, if a battery cell is used as an object to be packaged, there are problems in that there is a possibility of battery characteristics deteriorating and appearance characteristics also deteriorating.

The present invention has been made in view of the above problems and provides a film molded article, a film packaged body using the same, a method of manufacturing a film molded article, and a method of manufacturing a film packaged body through which it is possible to inhibit generation of wrinkles in a film when an object to be packaged is packaged and sealed.

### [Solution to Problem]

The invention according to Claim 1 is a film molded article in which a plurality of concave or convex embossed portions disposed apart from each other are formed on a surface of a film, wherein the plurality of embossed portions are disposed on the surface of the film such that an enclosed region surrounded by the plurality of embossed portions and imaginary lines that connect the plurality of embossed portions is formed.

When an object is packaged by superimposing the film molded article of the present invention and an unprocessed sheet or when an object to be packaged is packaged by superimposing a pair of the film molded articles of the present invention, positions of the plurality of embossed portions and imaginary lines forming the enclosed region are freely folded according to a shape or a size of the object to be packaged and thus it is possible to inhibit generation of wrinkles in the film.

The invention according to Claim 2 is the film molded article according to Claim 1, wherein the embossed portion has a semicircular shape, a triangular shape, a U shape, a linear shape, a polygonal line shape, a curvilinear shape, a rectangular shape, a circular shape, or a point shape is a plan view.

According to the present invention, when the embossed portion has the above shape, it is possible to secure a stable shape for the enclosed region. In addition, when an object to be packaged is packaged by superimposing a pair of film molded articles, it is possible to inhibit generation of wrinkles in the film more effectively.

The invention according to Claim 3 is the film molded article according to Claim 2, wherein the embossed portion has a U shape in plan view and a region surrounded by the U shape on the surface of the film is a concave shape or a convex shape.

According to the present invention, when the embossed portion has the above shape, it is possible to secure a more stable shape for the enclosed region. When an object to be packaged is packaged by superimposing the pair of film molded articles, it is possible to inhibit generation of wrinkles in the film more effectively.

The invention according to Claim 4 is the film molded article according to any one of Claims 1 to 3, wherein the embossed portion has a shape that changes in multiple stages in a thickness direction from the surface of the film.

According to the present invention, when the embossed portion has a shape that changes in multiple stages, it is possible to flexibly have compatibility with objects to be packaged having various shapes.

The invention according to Claim 5 is the film molded article according to any one of Claims 1 to 4, wherein the film is made of a plastic material capable of adding a shape according to plastic deformation.

According to the present invention, since plastic deformation is caused in the film through pressing, engraving or the like using a simple manufacturing device, a desired shape is obtained and thus film molded articles having various shapes can be realized.

The invention according to Claim 6 is the film molded article according to any one of Claims 1 to 5, wherein the film is made of a heat-sealable laminate material.

According to the present invention, when the heat-sealable laminate material is used for the film, it is possible to improve productivity and it is possible to perform sealing while inhibiting generation of wrinkles in the film.

The invention according to Claim 7 is a film packaged body formed by superimposing a pair of the film molded articles according to any one of Claims 1 to 6, wherein an object to be packaged is disposed in the enclosed region formed on the film molded article, the pair of the film molded articles are superimposed to cover the object to be packaged, and peripheral portions of the film molded articles are sealed.

According to the present invention, since the film packaged body is obtained by superimposing the pair of film molded articles having the configuration, positions of the plurality of embossed portions and imaginary lines forming the enclosed region are freely folded according to a shape or a size of the object to be packaged, and thus it is possible to inhibit generation of wrinkles in the film.

The invention according to Claim 8 is the film packaged body according to Claim 7, wherein the object to be packaged is a lithium ion secondary battery cell.

According to the present invention, when the lithium ion secondary battery cell is packaged, the film packaged body can be configured as a lithium ion secondary battery having excellent sealability and appearance characteristics without wrinkles being generated in the film and having high battery performance.

The invention according to Claim 9 is a method of manufacturing a film molded article by which concave or convex embossed portions are formed on a surface of a film, including causing plastic deformation in the film by adding a shape to at least a part of the surface of the film using a mold, forming a plurality of the embossed portions to be disposed apart from each other on the surface of the film, and securing formation of an enclosed region surrounded by the plurality of embossed portions and imaginary lines that connect the plurality of embossed portions.

According to the present invention, in the method, by adding a shape to the surface of the film using a mold, the plurality of embossed portions are formed to secure an enclosed region surrounded by the embossed portions and imaginary lines that connect the embossed portions, and thus it is possible to manufacture a film molded article with favorable productivity at low cost without using a large manufacturing device.

The invention according to Claim 10 is the method of manufacturing a film molded article according to Claim 9, wherein the mold includes a punch and a die, and a tip portion in contact with the surface of the film in the punch is formed in a semicircular shape, a triangular shape, or a U shape in plan view, and wherein a shape is added to the surface of the film using the mold, and thus a plurality of the embossed portions having a semicircular shape, a triangular shape, or a U shape in plan view are formed on the surface of the film.

According to the present invention, the mold includes a punch and a die, a tip portion of the punch is optimized, and thus it is possible to form an embossed portion having a desired shape on the surface of the film with a simple device and procedure.

The invention according to Claim 11 is the method of manufacturing a film molded article according to Claim 9, wherein the mold includes a protrusion in contact with the surface of the film and the protrusion is formed in a U shape in plan view, and wherein a shape is added to the surface of the film using the mold, and thus a plurality of the embossed portions having a U shape in plan view are formed on the surface of the film by forming a region surrounded by the U shape as a concave shape or a convex shape.

According to the present invention, when the embossed portion is formed in this shape, it is possible to manufacture a film molded article such that the enclosed region is secured in a more stable shape, and it is possible to inhibit generation of wrinkles in the film more effectively when the pair of film molded articles are superimposed to package an object to be packaged.

The invention according to Claim 12 is a method of manufacturing a film packaged body by superimposing a pair of the film molded articles according to any one of Claims 1 to 6, including disposing an object to be packaged in the enclosed region formed in one film molded article between the pair of film molded articles, subsequently, superimposing the other film molded article on the one film molded article while the object to be packaged is covered in the enclosed region formed in the other film molded article, and subsequently, sealing peripheral portions of the pair of film molded articles.

According to the present invention, in this method, since a pair of film molded articles having the configuration are superimposed to cover an object to be packaged in the enclosed region formed in the film molded article, positions of the plurality of embossed portions and imaginary lines forming the enclosed region are freely folded according to a shape or a size of the object to be packaged and thus it is possible to inhibit generation of wrinkles in the film.

The invention according to Claim 13 is the method of manufacturing a film packaged body according to Claim 12, wherein a lithium ion secondary battery cell is used as the object to be packaged.

According to the present invention, when the lithium ion secondary battery cell is packaged, the film packaged body can be manufactured as a lithium ion secondary battery having excellent sealability and appearance characteristics without wrinkles being generated in the film and having high battery performance.

The invention according to Claim 14 is a film packaged body obtained by the method according to Claim 12 or 13.

According to the present invention, since the film packaged body is obtained by the method, the plurality of embossed portions are freely folded according to a shape or a size of an object to be packaged, and thus it is possible to inhibit generation of wrinkles in the film.

Note that, when it is described that "a shape is added using a mold" in the present invention, various molding methods using a mold, for example, engraving a surface of a film using a mold and performing vacuum molding, are used.

### [Advantageous Effects of Invention]

According to the film molded article of the present invention, a configuration in which a plurality of embossed portions are formed on a surface of a film and the embossed portions are connected by imaginary lines to secure an enclosed region is used. Therefore, it is possible to achieve favorable productivity at low cost without using a large manufacturing device.

In addition, according to the film packaged body of the present invention, when the pair of film molded articles are superimposed to package an object to be packaged, positions of the plurality of embossed portions and imaginary lines forming the enclosed region are freely folded according to a shape or a size of the object to be packaged and thus it is possible to inhibit generation of wrinkles in the film. Therefore, excellent sealability and appearance characteristics are obtained.

In addition, according to a method of manufacturing a film molded article of the present invention, when a shape is added to a surface of a film using a mold, a plurality of embossed portions are formed such that an enclosed region surrounded by the embossed portions and imaginary lines that connect the embossed portions is secured. Therefore, it is possible to manufacture a film molded article with favorable productivity at low cost without using a large manufacturing device.

In addition, according to a method of manufacturing a film packaged body of the present invention, in the method, a pair of film molded articles having the configuration are superimposed to cover an object to be packaged in the enclosed region formed in the film molded article. Therefore, positions of the plurality of embossed portions and imaginary lines forming the enclosed region are freely folded according to a shape or a size of the object to be packaged. Accordingly, it is possible to inhibit generation of wrinkles in the film and it is possible to manufacture a film packaged body having excellent sealability and appearance characteristics.

### [Brief Description of Drawings]

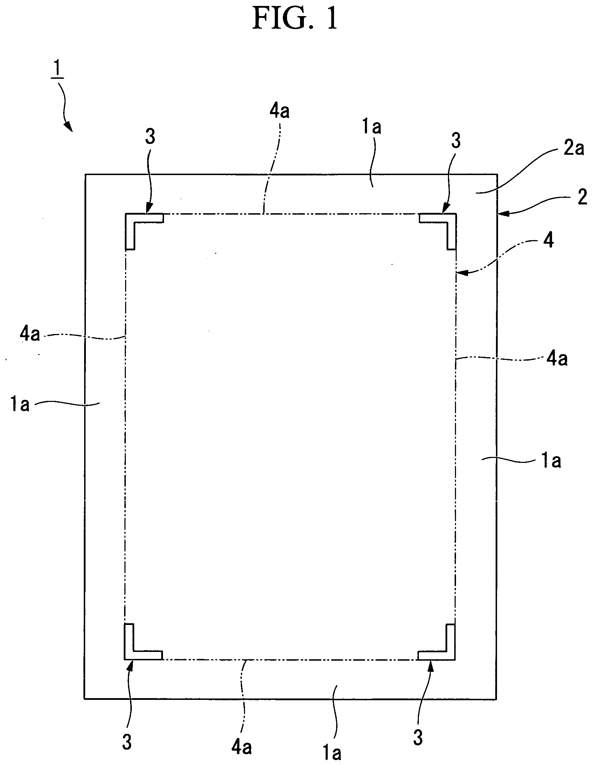

Fig. 1 is a diagram schematically showing a film molded article according to an embodiment of the present invention and in plan view showing an example in which triangular embossings are formed on a surface of a film.

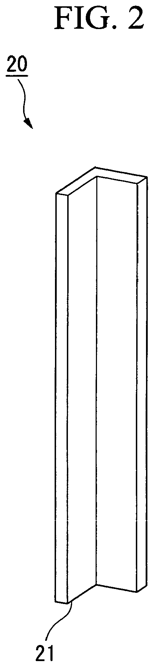

Fig. 2 is a diagram schematically showing a method of manufacturing a film molded article according to an embodiment of the present invention and is a perspective view showing an example of a punch of a mold.

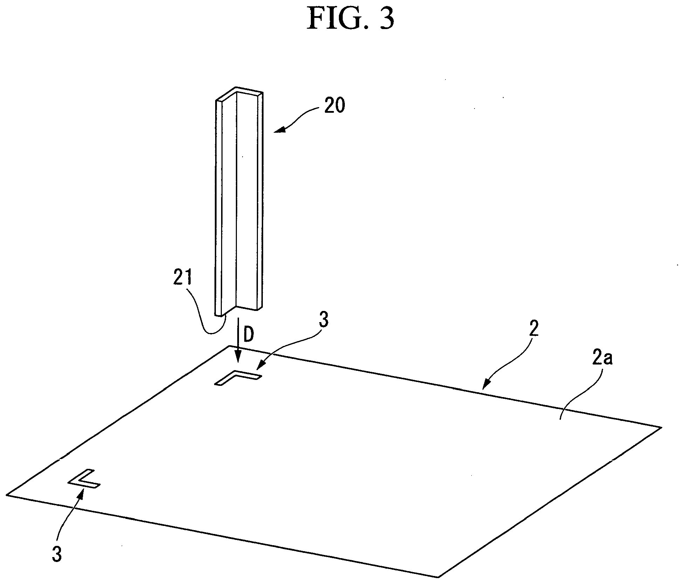

Fig. 3 is a diagram schematically showing a method of manufacturing a film molded article according to an embodiment of the present invention and is a schematic diagram showing an example of a process of forming an embossed portion on a surface of a film using a mold.

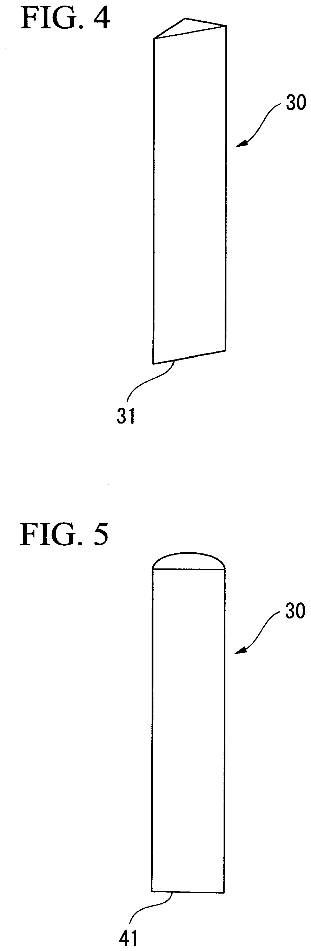

Fig. 4 is a diagram schematically showing a method of manufacturing a film molded article according to an embodiment of the present invention and is a perspective view showing another example of the punch of the mold.
Fig. 5 is a diagram schematically showing a method of manufacturing a film molded article according to an embodiment of the present invention and is a perspective view showing still another example of the punch of the mold.

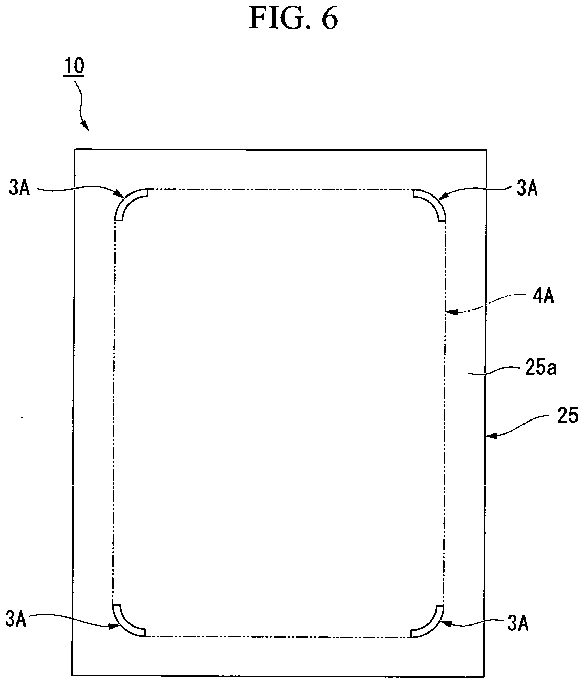

Fig. 6 is a diagram schematically showing a film molded article according to an embodiment of the present invention and is a plan view showing another example in which semicircular embossings are formed on a surface of a film.

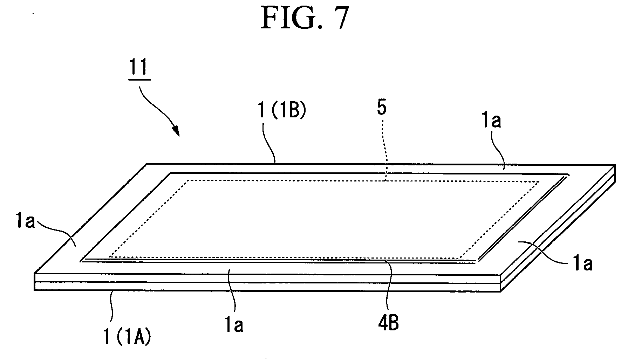

Fig. 7 is a diagram showing a film packaged body and a method of manufacturing the same according to an embodiment of the present invention, and is a perspective view showing a state in which a pair of film molded articles are superimposed to package an object to be packaged.

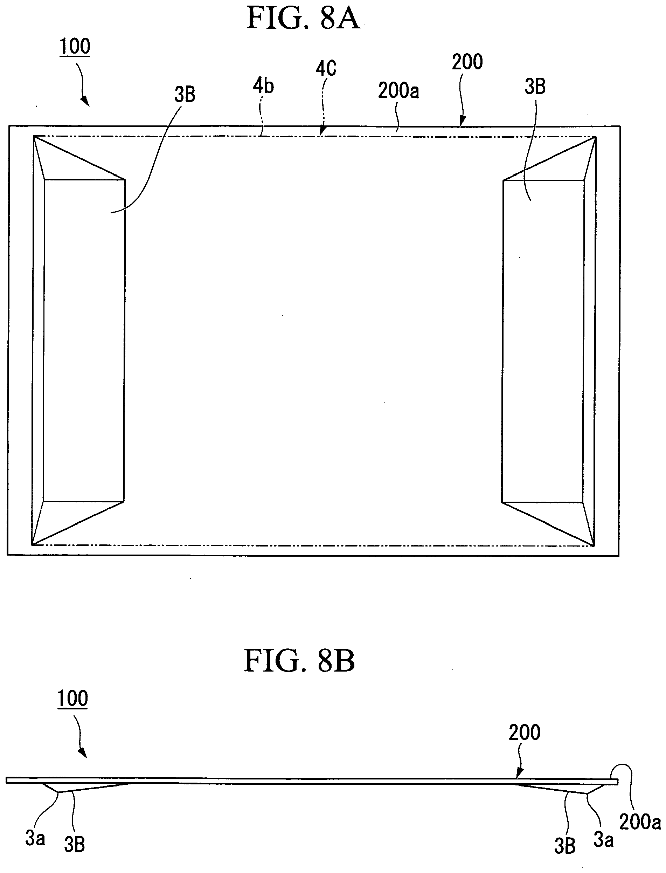

Fig. 8A is a diagram showing a film packaged body and a method of manufacturing the same according to an embodiment of the present invention and is a plan view showing another example in which a U-shaped embossing is formed on a surface of a film.
Fig. 8B is a diagram showing a film packaged body and a method of manufacturing the same according to an embodiment of the present invention, is a diagram showing another example in which a U-shaped embossing is formed on a surface of a film, and is a diagram showing the film packaged body in Fig. 8A viewed from the side.

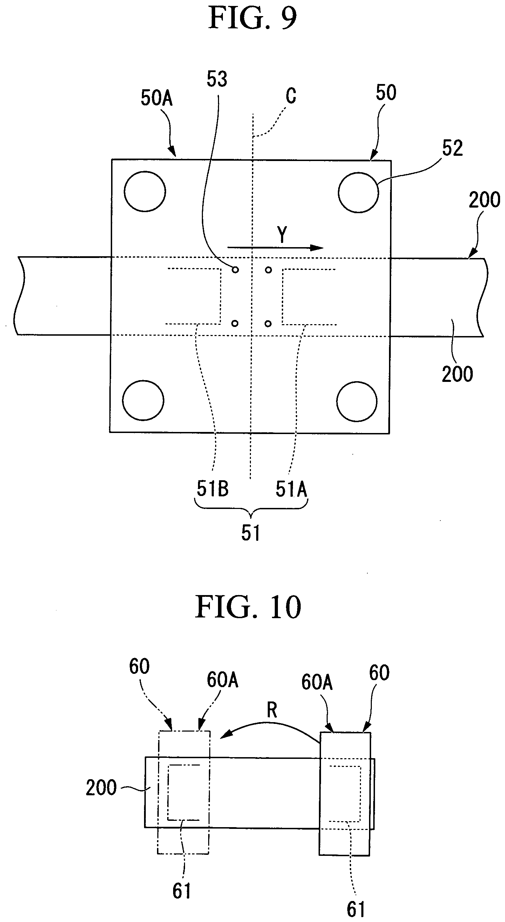

Fig. 9 is a diagram schematically showing a method of manufacturing a film molded article according to an embodiment of the present invention and is a schematic diagram showing an example of a process of forming a U-shaped embossed portion in plan view on a surface of a film using a mold.
Fig. 10 is a diagram schematically showing a method of manufacturing a film molded article according to an embodiment of the present invention and is a schematic diagram showing another example of a process of forming a U-shaped embossed portion in plan view on a surface of a film using a mold.

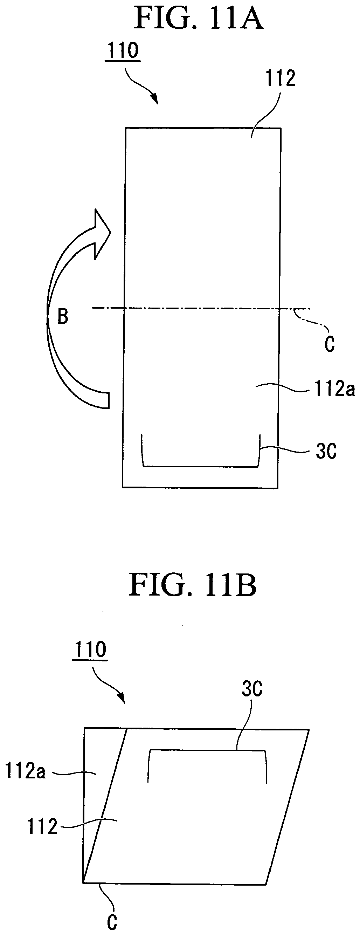

Fig. 11A is a diagram showing a film packaged body and a method of manufacturing the same according to another embodiment of the present invention and is a plan view showing an example in which an elongated film molded article in plan view is folded in half and the halves are superimposed to form a film packaged body.
Fig. 11B is a diagram showing a film packaged body and a method of manufacturing the same according to another embodiment of the present invention and is a schematic diagram showing an example in which an elongated film molded article in plan view is folded in half and the halves are superimposed to form a film packaged body.

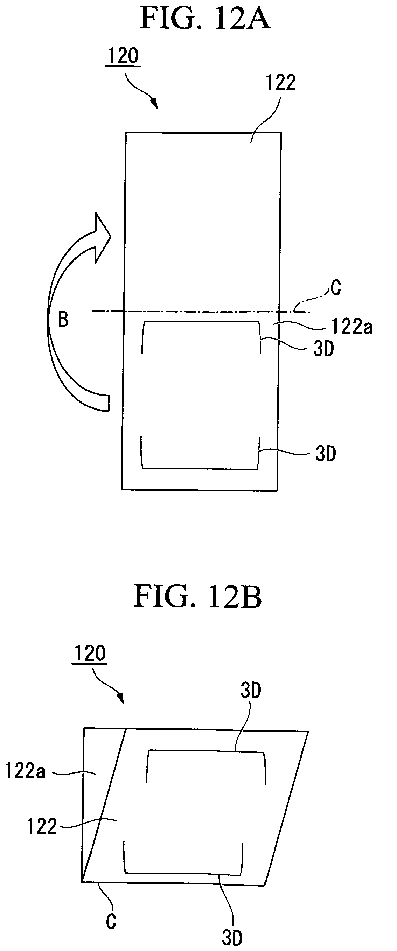

Fig. 12A is a diagram showing a film packaged body and a method of manufacturing the same according to another embodiment of the present invention and is a plan view showing an example in which an elongated film molded article in plan view is folded in half and the halves are superimposed to form a film packaged body.
Fig. 12B is a diagram showing a film packaged body and a method of manufacturing the same according to another embodiment of the present invention and is a schematic diagram showing an example in which an elongated film molded article in plan view is folded in half and the halves are superimposed to form a film packaged body.

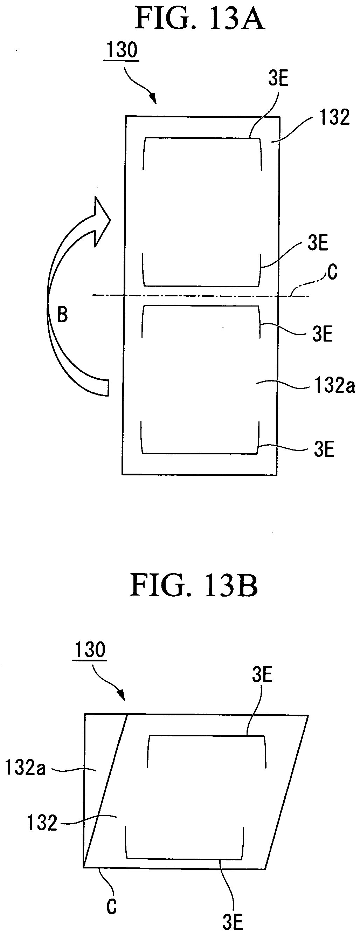

Fig. 13A is a diagram showing a film packaged body and a method of manufacturing the same according to another embodiment of the present invention and is a plan view showing an example in which an elongated film molded article in plan view is folded in half and the halves are superimposed to form a film packaged body.
Fig. 13B is a diagram showing a film packaged body and a method of manufacturing the same according to another embodiment of the present invention and is a schematic diagram showing an example in which an elongated film molded article in plan view is folded in half and the halves are superimposed to form a film packaged body.

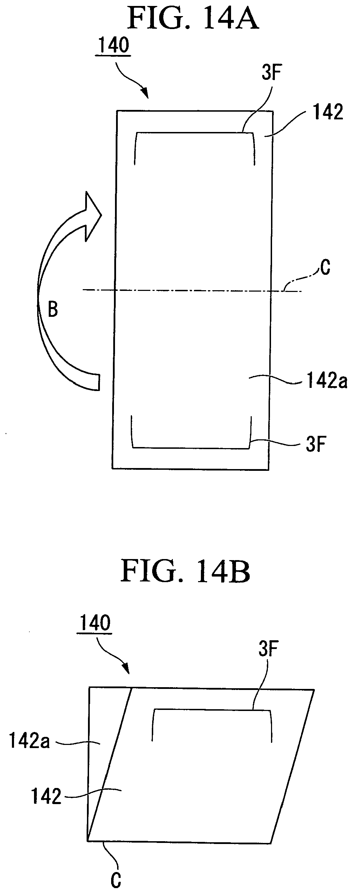

Fig. 14A is a diagram showing a film packaged body and a method of manufacturing the same according to another embodiment of the present invention and is a plan view showing an example in which an elongated film molded article in plan view is folded in half and the halves are superimposed to form a film packaged body.
Fig. 14B is a diagram showing a film packaged body and a method of manufacturing the same according to another embodiment of the present invention and is a schematic diagram showing an example in which an elongated film molded article in plan view is folded in half and the halves are superimposed to form a film packaged body.

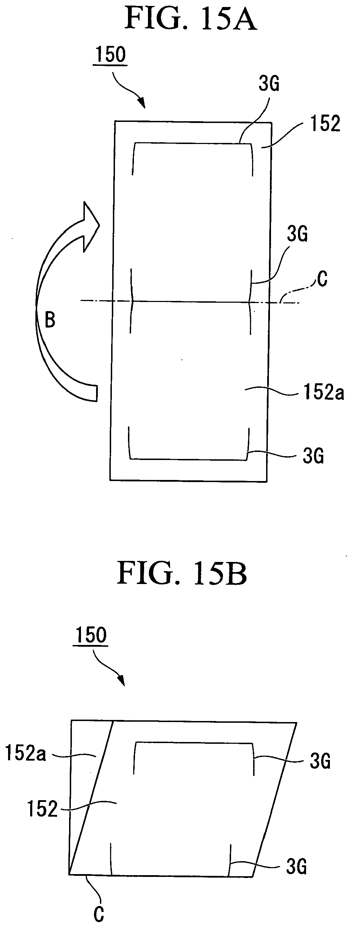

Fig. 15A is a diagram showing a film packaged body and a method of manufacturing the same according to another embodiment of the present invention and is a plan view showing an example in which an elongated film molded article in plan view is folded in half and the halves are superimposed to form a film packaged body.
Fig. 15B is a diagram showing a film packaged body and a method of manufacturing the same according to another embodiment of the present invention and is a schematic diagram showing an example in which an elongated film molded article in plan view is folded in half and the halves are superimposed to form a film packaged body.
Fig. 16A is a diagram showing a film packaged body and a method of manufacturing the same according to an embodiment of the present invention and is a plan view showing a state of a sealed film packaged body when a thickness of an object to be packaged is changed in an experiment in which a pair of film molded articles are superimposed to package the object to be packaged.
Fig. 16B is a diagram showing a film packaged body and a method of manufacturing the same according to an embodiment of the present invention and is a plan view showing a state of a sealed film packaged body when a thickness of an object to be packaged is changed in an experiment in which a pair of film molded articles are superimposed to package the object to be packaged.
Fig. 16C is a diagram showing a film packaged body and a method of manufacturing the same according to an embodiment of the present invention and is a plan view showing a state of a sealed film packaged body when a thickness of an object to be packaged is changed in an experiment in which a pair of film molded articles are superimposed to package the object to be packaged.

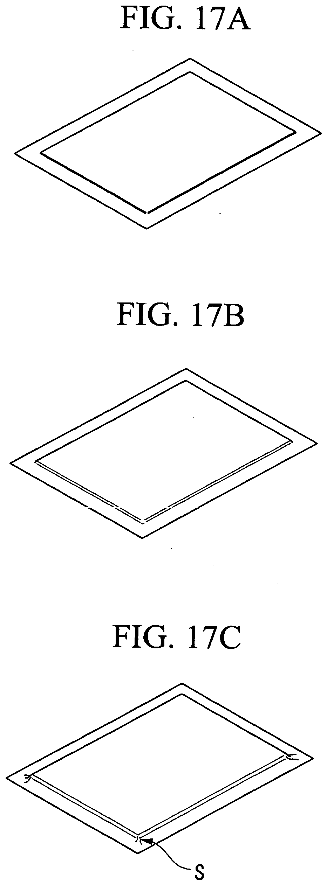

Fig. 17A is a plan view showing a state of a sealed film packaged body when an experiment in which a pair of sheet films are superimposed to package an object to be packaged while a thickness of the object to be packaged is changed according to a method of the related art is performed.
Fig. 17B is a plan view showing a state of a sealed film packaged body when an experiment in which a pair of sheet films are superimposed to package an object to be packaged while a thickness of the object to be packaged is changed according to a method of a related art is performed.
Fig. 17C is a plan view showing a state of a sealed film packaged body when an experiment in which a pair of sheet films are superimposed to package an object to be packaged while a thickness of the object to be packaged is changed according to a method of a related art is performed.

### [Description of Embodiments]

Hereinafter, a film molded article, a film packaged body using the same, a method of manufacturing a film molded article, and a method of manufacturing a film packaged body according to embodiments of the present invention will be described with reference to drawings.

### [Film molded article and method of manufacturing the same]

Hereinafter, a film molded article 1 and a method of manufacturing the same according to this embodiment will be described with reference to Fig. 1 to Fig. 6 appropriately.

As shown in Fig. 1, in the film molded article 1 of this embodiment, a plurality of concave or convex embossed portions 3 disposed apart from each other are formed on a surface 2a of a film 2. Therefore, the plurality of embossed portions 3 are disposed on a surface of the film 2 and schematically configured such that an enclosed region 4 surrounded by the plurality of embossed portions 3 and imaginary lines 4a that linearly connect the plurality of embossed portions 3 is formed.

The film molded article 1 of this embodiment can be applied as, for example, a package of a product such as cosmetics and an exterior body of a lithium ion secondary battery.

The film 2 can utilize, for example, metal materials such as aluminum, stainless steel, and brass and various sheet materials such as a polymer film. In addition, the film 2 may be formed as a laminated film of a metal and a resin, a laminated film of aluminum and a nylon resin, or a laminated film of stainless steel and a polypropylene resin. Also, a film having a thickness of about 10 to 800 µm can be used as the film 2.

The film 2 used in this embodiment is preferably made of a plastic material that can add a desired shape according to plastic deformation. This is because, according to a method such as engraving and pressing using a mold to be described below, it is easy to add a desired shape to the surface 2a of the film 2 and film molded articles having various shapes can be formed. Further, as a method of adding a shape to the film 2 made of a plastic material, methods such as pressure molding, heat pressure molding, vacuum molding, and heat vacuum molding known in the related art can be used.

In addition, a sealable laminate material is preferably used for the film 2. In this manner, when the sealable laminate material is used for the film, a sealing process performed when the film molded articles 1 are superimposed to form a film packaged body is simplified, productivity is improved, and it is possible to significantly inhibit generation of wrinkles in the film 2 (a peripheral portion 1a) as will be described below.

As described above, as the sealable laminate material, a laminate material capable of heat sealing or pressure-sensitive sealing can be exemplified.

Examples of the heat sealable laminate material include hot melt resins formed of a polyethylene resin, a polypropylene resin, a polyester resin, and the like.

Examples of the laminate material capable of pressure-sensitive sealing include a binding material formed of an acrylic resin, a silicone resin, and the like and an adhesive material formed of an acrylic resin, a silicone resin, an epoxy resin and the like.

As shown in Fig. 1, the plurality of embossed portions 3 are formed on the surface 2a of the film 2 and are formed to be concave or convex when viewed from the surface 2a side. In addition, the embossed portions 3 in the shown example have L shapes in plan view, that is, are formed in an approximately triangular shape having no bottom portion in plan view, and are disposed at four areas on the surface 2a of the film 2 to form an approximately rectangular region. That is, the embossed portions 3 in the example shown in Fig. 1 are disposed on the surface 2a of the film 2 such that the enclosed region 4 surrounded by the embossed portions 3 and the imaginary lines 4a that linearly connect the embossed portions 3 is formed.

Also, along an imaginary line 4a that connects an embossed portion 3 and another embossed portion 3, one or more embossed portions (not shown) may be formed.

The embossed portions 3 are portions that serve as edge portions in a portion for accommodating an object to be packaged when the pair of film molded articles 1 are superimposed to form a film packaged body to be described below and as will be described below in detail, when the object to be packaged is interposed and sealed, the portions are freely folded and thus a concave accommodating portion is formed between the pair of film molded articles 1. In addition, the accommodating portion has a size that substantially matches the enclosed region 4 described above in plan view.

Also, a region further outward than the enclosed region 4 in the film molded article 1 is the peripheral portion 1a when the pair of film molded articles 1 are superimposed to form a film packaged body to be described below.

A size of projection (convex) from the surface 2a of the film 2 of the embossed portion 3 and a size of a depth (concave) are not particularly limited, but may be determined in consideration of ease of bending (in particular, a thickness of an object to be packaged) when the pair of film molded articles 1 are superimposed, an object to be packaged is interposed therebetween, and an accommodating portion is formed, and for example, may be about 0.1 to 20 mm.

Also, in the film molded article 1 shown in Fig. 1, while the embossed portion 3 is formed in an approximately triangular shape having no bottom portion in plan view, the present invention is not limited thereto. For example, as in a film molded article 10 shown in Fig. 6, an embossed portion 3A having an approximately arc shape may be formed. Whichever of the above-described shapes the embossed portion has, it is possible to form an enclosed region (sign 4 in Fig. 1 or sign 4A in Fig. 6) in a stable shape, and when the pair of the film molded articles 1 and 10 are superimposed to package an object to be packaged and a film packaged body to be described below is formed, it is possible to inhibit generation of wrinkles in a film more effectively.

In addition, the embossed portion can have a shape including a linear shape, a polygonal line shape, a curvilinear shape, a rectangular shape, a circular shape, or a point shape in plan view, and the shape is not particularly limited.

In addition, in the film molded article 1 shown in Fig. 1, while the embossed portions 3 formed at four areas are connected by the imaginary lines 4a having a linear shape in plan view, the present invention is not limited thereto. For example, the embossed portions may be connected by imaginary lines that are curvilinear in plan view on the surface 2a of the film 2, and dispositions of the embossed portions and the imaginary line can be appropriately designed according to usage forms of the film molded article and the like. However, in consideration of ease of designing the film molded article according to this embodiment, the imaginary lines are preferably straight lines that are drawn to secure a maximum enclosed region by connecting arbitrary points of the plurality of embossed portions. In addition, the enclosed region has an area that is preferably 100% or more of an area of the object to be packaged, and more preferably exceeds 100% thereof. More specifically, if the area of the enclosed region is in a range of 101 to 105% of the area of the object to be packaged, when the pair of the film molded articles 1 and 10 are superimposed to package an object to be packaged and a film packaged body to be described below is formed, it is possible to inhibit generation of wrinkles in a film more effectively.

Further, in this embodiment, as in a film molded article 100 shown in Fig. 8A and Fig. 8B, on a surface 200a of a film 200, two embossed portions 3B formed in an approximately trapezoidal shape in plan view may be disposed to face each other.

Moreover, in this embodiment, the embossed portion 3B formed in a trapezoidal shape in plan view may have a configuration in which a region surrounded by the trapezoidal shape on the surface 200a of the film 200 is formed in a concave shape or a convex shape. In the shown example, the embossed portion 3B is formed as a planar concave portion that is recessed downward from the surface 200a of the film 200 (downward in a vertical direction in Fig. 8B) when a tip 3a is set as the lowermost part.

Here, similarly to the embossed portions 3 included in the film molded article 1 shown in Fig. 1, the embossed portions 3B included in the film molded article 100 are disposed on the surface 200a of the film 200 such that an enclosed region 4C surrounded by the two embossed portions 3B and imaginary lines 4b that linearly connect the embossed portions 3B is formed.

In addition, in the film molded article of this embodiment, although details are omitted, the embossed portion may be formed in a shape that changes in multiple stages in a thickness direction from a surface of a film, for example, a size in the thickness direction may change in a stepwise manner. Accordingly, when a film packaged body to be described below is manufactured by superimposing a pair of film molded articles, for example, when objects to be packaged having various shapes are packaged, it is possible to flexibly have compatibility therewith.

Next, a method of manufacturing the film molded article 1 having the above configuration will be described with reference to Fig. 1 to Fig. 3.

A method of manufacturing the film molded article 1 of this embodiment is a method of forming the concave or convex embossed portions 3 on the surface 2a of the film 2 as shown in Fig. 3. That is, the manufacturing method of this embodiment is a method in which a shape is added to at least a part of the surface 2a of the film 2 using a mold to cause plastic deformation in the film 2, the plurality of embossed portions 3 are thus formed on the surface 2a of the film 2 such that the plurality of embossed portions 3 are disposed apart from each other, and formation of the enclosed region 4 surrounded by the plurality of embossed portions 3 and the imaginary lines 4a that connect the embossed portions 3 is secured. In addition, in this embodiment, an exemplary method will be described in which the mold includes a punch 20 serving as a male mold shown in Fig. 2 and Fig. 3 and a die (not shown) serving as a female mold, the surface 2a of the film 2 is engraved by the punch 20 having a tip portion 21 whose shape in plan view is an approximately triangular shape, and the plurality of embossed portions 3 having approximately triangular shapes in plan view are formed on the surface 2a of the film 2.

Specifically, as shown in Fig. 3, first, the film 2 is placed on a die (not shown). Here, although not shown in Fig. 3, the die constitutes a mold together with the punch 20, is disposed on a surface opposite to the surface 2a of the film 2, and has a shape in which a concave portion that a shape of the tip portion 21 of the punch 20 enters is formed.

Next, the punch 20 is moved in a direction D, and the surface 2a of the film 2 is engraved at a scheduled formation position of the embossed portion 3. Accordingly, the embossed portion 3 is formed at one area of the surface 2a of the film 2, the punch 20 is then moved to another scheduled formation position of the embossed portion 3 on the film 2, and engraving is performed in the same manner as described above to form the embossed portion 3. In this embodiment, by repeating such procedures, the plurality of embossed portions 3 are sequentially formed. Here, while a state in which the embossed portions 3 are formed at two areas of the surface 2a of the film 2 is shown in Fig. 3, in the manufacturing method of this embodiment, finally, the embossed portions 3 are formed at a total of four areas such that the enclosed region 4 surrounded by the imaginary lines 4a as in the example shown in Fig. 1 is formed.

Note that, in this embodiment, a position in which the embossed portion 3 is formed and the number thereof formed are not limited, and can be appropriately determined in consideration of a shape, a size of an object to be packaged and the like when a film packaged body to be described below is formed. For example, while the embossed portions 3 are formed at a total of four areas in the example shown in Fig. 1, for example, an embossed portion can further be formed in a part along the imaginary line 4a.

In addition, while the embossed portions 3 are disposed at four areas and the enclosed region 4 having an approximately rectangular shape in plan view is formed in the shown example, the present invention is not limited thereto. For example, a plurality of embossed portions may be disposed to form an enclosed region having an approximately triangular shape. Moreover, a plurality of embossed portions may be disposed to form an enclosed region having an approximately circular shape.

The film molded article 1 of this embodiment has a configuration in which the plurality of embossed portions 3 are formed on the surface 2a of the film 2 and the embossed portions 3 are connected by the imaginary lines 4a to secure the enclosed region 4. Thus, it is possible to manufacture the film molded article 1 using a mold and the like including the small punch 20 as described above without using a large manufacturing device. Accordingly, it is possible to manufacture the film molded article 1 with high productivity at low cost. In addition, when the pair of film molded articles 1 of this embodiment are superimposed to package an object to be packaged and a film packaged body to be described below is formed, positions of the plurality of embossed portions 3 and the imaginary lines 4a forming the enclosed region 4 are freely folded according to a shape or a size of an object to be packaged, and thus it is possible to obtain a film packaged body without generating wrinkles in the film 2.

While a method in which a shape of the tip portion 21 is an approximately L shape in plan view as shown in Fig. 2 and Fig. 3, the punch 20 formed in an approximately triangular shape having no bottom portion is used, and thus the embossed portion 3 having an approximately L shape (an approximately triangular shape) in plan view as shown in Fig. 1 and Fig. 3 is formed has been described above, the present invention is not limited thereto. For example, a method in which a triangular punch 30 having a shape in which a tip portion 31 is completely embedded as shown in Fig. 4 is used as a mold and the surface 2a of the film 2 is engraved may be used. In this case, for example, an engraving angle with respect to the film 2 of the punch 30 is regulated or a punch having a tip portion at which an angle is formed in advance is used, and thus a shape of the embossed portion formed on the surface 2a of the film 2 can be set as a shape that smoothly changes in a thickness direction from the surface 2a.

Alternatively, in this embodiment, as shown in Fig. 5, a punch 40 having a tip portion 41 whose shape is approximately semicircular in plan view may be used. Also, in this case, an engraving angle with respect to a film of the punch 40 is regulated or a punch having a tip portion at which an angle is formed in advance is used; for example, as shown in Fig. 6, the embossed portion 3A in which only a portion that corresponds to the vicinity of a circular arc portion of the tip portion 41 of the punch 40 is deformed may be formed on a surface 25a of a film 25. In addition, similarly to the above case, in this case also, for example, an engraving angle with respect to the film 2 of the punch 40 is regulated, and thus a shape of the embossed portion formed on the surface 2a of the film 2 can be set as a shape that smoothly changes from the surface 2a.

In the manufacturing method of this embodiment, as described above, the mold includes the punch 20 (30 and 40) and the die (not shown), and a shape of the tip portion 21 (31 and 41) of the punch 20 (30 and 40) is optimized. Therefore, it is possible to form an embossed portion having a desired shape on a surface of a film with a simple device and procedure.

Also, in this embodiment, as described above, in the method of manufacturing the film molded article 1 using the mold including the small punch 20, for example, a position of the surface 2a of the film 2 that is engraved by the punch 20 is appropriately changed, and thus it is possible to easily change a position of the embossed portion 3 to be formed. Accordingly, it is possible to easily change a size of the enclosed region 4 that is secured when the embossed portions 3 are connected by the imaginary lines 4a. Thus, for example, when the pair of film molded articles 1 are superimposed to form a film packaged body to be described below, it is possible to flexibly correspond to a size and a shape of an object to be packaged.

In addition, in this embodiment, in a method of manufacturing the film molded article 1 using a mold including the small punch 20 without using a large manufacturing device, for example, in a process of manufacturing a film packaged body by packaging an object to be packaged to be described below, it is easy to incorporate a process of manufacturing the film molded article in-line. Accordingly, it is possible to improve productivity in the process of manufacturing the film molded article and reduce a manufacturing cost.

Further, in this embodiment, as in the film molded article 100 shown in Fig. 8A and Fig. 8B, when the embossed portion 3B is formed in a U shape in plan view on the surface 200a of the film 200, and particularly, when the embossed portion 3B is formed in a concave shape or a convex shape, for example, the following method can be used. Also, in the following description, a case in which, when the two embossed portions 3B formed in a U shape in plan view are formed, a region surrounded by a U shape on the surface 200a of the film 200 as shown in Fig. 8A and Fig. 8B is formed as a concave surface will be exemplified.

As shown in Fig. 8A and Fig. 8B, when the concave embossed portion 3B is formed on the surface 200a of the film 200, for example, a mold 50 shown in Fig. 9 can be used. Fig. 9 is a diagram schematically showing an exemplary process of forming the embossed portion 3B having a U shape in plan view on the surface 200a of the film 200 using the mold 50 seen from above the film 200.

The mold 50 shown in Fig. 9 includes two protrusions 51 (51 A and 51 B: indicated by hidden dashed lines in Fig. 9) in contact with the surface 200a of the film 200 on an outer surface of a base plate 50A, and the protrusions 51 are formed in a U shape in plan view. In addition, the protrusions 51A and 51B are disposed such that orientations of U shapes are opposite to each other.

In addition, in the base plate 50A of the mold 50, holes 52 into which a guide rod (not shown) for slidingly moving the base plate 50A to perform an engraving operation is inserted are provided at a total of four areas.

In addition, in the base plate 50A of the mold 50, a pin hole 53 that can be used for alignment of the film 200 is provided.

In addition, although not shown, in the mold 50, on a side that faces the base plate 50A with the film 200 therebetween, a die member in which a concave portion entered by a shape of the protrusion 51 is formed is included.

Therefore, when a concave embossed portion is formed on the surface 200a of the film 200 using the mold 50, first, the elongated film 200 drawn from a roll portion (not shown) wound in a roll shape is introduced into the mold 50 such that the elongated film 200 is inserted between the base plate 50A and a die member (not shown).

Next, the base plate 50A guided by the guide rod (not shown) is slidingly moved along the guide rod, the protrusion 51 is brought in contact with the surface 200a, and the surface 200a is thus engraved at a scheduled formation position of an embossed portion. In this case, two areas on the surface 200a of the film 200 are engraved according to the protrusions 51A and 51B, and the embossed portions 3B (refer to Fig. 8A and Fig. 8B) are formed at two areas.

Next, the base plate 50A is slidingly moved apart from the film 200.

Next, the film 200 is cut at an intermediate position between two embossed portions (corresponding to positions of the protrusions 51A and 51B in Fig. 9) that are formed by engraving, that is, at a position of a line C in Fig. 9. Such a cutting process of the film 200 can be performed by, for example, a movable cutter (not shown) provided in the mold 50.

Then, the cut film 200 is conveyed in a direction of an arrow Y shown in Fig. 9 and thus positions at which embossed portions are scheduled to be formed in the next process in a longitudinal direction of the film 200 are set as positions corresponding to the protrusions 51 A and 51B of the mold 50.

Then, by repeating the procedures described above, the embossed portions 3B shown in Fig. 8A and Fig. 8B are sequentially formed, and thus it is possible to successively manufacture the film molded article 100.

Here, when the film molded article 100 shown in Fig. 8A and Fig. 8B is manufactured using the mold 50 shown in Fig. 9, embossings 3B and 3B are formed according to the protrusions 51 A and 51B of the mold 50, and cutting is then performed at a position of a line C between the embossings 3B and 3B. Therefore, it is possible to inhibit generation of shrinkage on a cut surface of the film 200.

In addition, a method of manufacturing the film molded article 100 shown in Fig. 8A and Fig. 8B is not limited to the above method. For example, a method using a mold 60 shown in Fig. 10 can be used.

The mold 60 shown in Fig. 10 includes a protrusion 61 (indicated by a hidden dashed line in Fig. 10) in contact with the surface 200a of the film 200 on an outer surface of a base plate 60A. The protrusion 61 is formed in a U shape in plan view.

In addition, although not shown, similarly to the mold 50 described above, in the mold 60, on a side that faces the base plate 60A with the film 200 therebetween, a die member in which a concave portion entered by a shape of the protrusion 61 is formed is included.

Therefore, when a concave embossed portion is formed on the surface 200a of the film 200 using the mold 60, similarly to the above case, first, the elongated film 200 is inserted between the base plate 50A and a die member (not shown).

Next, the protrusion 61 is brought in contact with the surface 200a of the film 200 and the surface 200a is thus engraved at a scheduled formation position of an embossed portion so that the embossed portion 3B (refer to Fig. 8A and Fig. 8B) is formed.

Next, the base plate 60A is rotated by a rotation mechanism (not shown), and the base plate 60A is thus moved to a vacuum side of the film 200 (refer to an arrow R shown in Fig. 10 and the mold 60 indicated by a two-dot chain imaginary line). In this case, as shown in Fig. 10, since the base plate 60A rotates, an orientation of a U shape in the protrusion 61 is an opposite orientation in a longitudinal direction of the film 200.

Then, the rotated base plate 60A is moved to the film 200 side, the protrusion 61 is brought in contact with the surface 200a of the film 200, and engraving is performed at a scheduled formation position of an embossed portion to form the embossed portion. Therefore, it is possible to manufacture the film molded article 100 shown in Fig. 8A and Fig. 8B.

In the above manufacturing method, while an exemplary method in which a surface of a film is engraved by a mold (a punch) has been described, the present invention is not limited thereto. For example, methods such as vacuum forming described above can be used without limitation.

### [Film packaged body and method of manufacturing the same]

Hereinafter, a film packaged body 11 and a method of manufacturing the same according to this embodiment will be described with reference to Fig. 1 and Fig. 7 appropriately. Fig. 7 is a perspective view showing the film packaged body 11 when a pair of film molded articles 1 are superimposed to package an object to be packaged 5.

The film packaged body 11 of this embodiment is a film packaged body 11 obtained by superimposing the pair of film molded articles 1 of this embodiment described above. Therefore, the film packaged body 11 is schematically configured such that the object to be packaged 5 is disposed in the enclosed region 4 formed on the film molded article 1, the pair of film molded articles 1 are superimposed to cover the object to be packaged 5, and the peripheral portions 1a of the film molded article 1 are sealed.

The object to be packaged 5 accommodated and packaged in the film packaged body 11 of this embodiment includes, for example, cosmetics and a lithium secondary battery cell as described above, but various other objects to be packaged can be applied without limitation.

Here, when a lithium secondary battery cell is applied as the object to be packaged 5 and the film packaged body 11 is configured as a lithium ion secondary battery, the lithium secondary battery cell to be used is not particularly limited. For example, although details are omitted, as the lithium secondary battery cell to be applied as the object to be packaged 5, a laminated body in which a positive electrode sheet in which a positive electrode active material layer is provided on a positive electrode current collector and a negative electrode sheet in which a negative electrode active material layer is provided on a negative electrode current collector are laminated with a separator therebetween can be used. In addition, when the laminated body is used as the object to be packaged 5, a nonaqueous electrolyte (not shown) is accommodated inside the film packaged body 11 together with the laminated body.

Also, when the peripheral portions 1a of the pair of film molded articles 1 are sealed, a method, for example, adhesion and heat sealing, can be used. However, a method in which a heat-sealable laminate material is used for the film 2 and the peripheral portions 1a are thermally sealed as described above is preferable in consideration of sealability and productivity.

Next, a method of manufacturing the film packaged body 11 having the above configuration will be described with reference to Fig. 1 and Fig. 7.

In a method of manufacturing the film packaged body 11 of this embodiment, first, between a pair of film molded articles 1 (1A and 1B), the object to be packaged 5 is disposed in the enclosed region 4 that is formed in one film molded article 1A. More specifically, for example, the object to be packaged 5 shown in Fig. 7 is disposed such that it is contained in the enclosed region 4 that is secured on the film molded article 1 (one film molded article 1A shown in Fig. 7) shown in Fig. 1.

Next, as shown in Fig. 7, the other film molded article 1B having the same configuration as the film molded article 1 in Fig. 1 is superimposed on the one film molded article 1A while covering the object to be packaged 5 in an enclosed region (not shown) formed in the other film molded article 1B.

Then, while the object to be packaged 5 is interposed between the pair of film molded articles 1 (1A and 1B), the peripheral portions 1a of the pair of film molded articles 1 (1A and 1B) are sealed under vacuum reduced pressure. In this case, as a method of sealing the peripheral portions 1a, a method in which the peripheral portions 1a are heated, pressed and fused using a vacuum laminator, a roller and a vacuum packing device can be used. In addition, when the peripheral portions 1a are sealed while the object to be packaged 5 is interposed therebetween, a position of the enclosed region 4 in which the object to be packaged 5 is disposed is formed as an accommodating portion 4B having a concave shape when viewed from a surface side on which the pair of film molded articles 1(1A and 1B) are bonded to each other.

In this embodiment, the object to be packaged 5 is packaged using the pair of film molded articles 1 in which a shape is not added at positions of the imaginary lines 4a that connect the concave or convex embossed portions 3. In this case, while positions of the plurality of embossed portions 3 and the imaginary line 4a forming the enclosed region 4 are freely folded according to a shape or a size of an object to be packaged, the peripheral portions 1a of the pair of film molded articles 1 (1A and 1B) are sealed. Accordingly, for example, even if a battery cell having a thick laminated body is packaged and the peripheral portions 1a are sealed, it is possible to inhibit generation of wrinkles in the peripheral portions 1a which originate from the vicinity of an edge of an accommodating space of the object to be packaged 5.

As described above, for example, when a lithium ion secondary battery cell is packaged as the object to be packaged 5 and the film packaged body 11 is configured as a lithium ion secondary battery, a lithium ion secondary battery having excellent sealability and appearance characteristics, and high battery performance without wrinkles being generated in the peripheral portion 1a (the film 2) is obtained. In addition, when the pair of film molded articles 1 are used to configure a lithium ion secondary battery, a center portion of the enclosed region 4 serving as an accommodating space becomes inflatable, for example, even if a temperature of a lithium ion secondary battery cell packaged inside increases and the lithium ion secondary battery cell inflates. Accordingly, in particular, in the vicinity of the center of the lithium ion secondary battery cell (in the vicinity of the center of the object to be packaged 5 in plan view), it is easy to maintain a distance between electrodes and thus battery characteristics do not easily deteriorate.

Also, when the film packaged body 11 of this embodiment is applied to a lithium ion secondary battery cell, it is necessary to inject a nonaqueous electrolyte thereinto as described above. In such a case, for example, a method in which, after three portions among four peripheral portions 1a in Fig. 7 are sealed, a nonaqueous electrolyte is injected from a position of the one unsealed peripheral portion 1a, and the unsealed peripheral portion 1a is then sealed under vacuum reduced pressure can be used.

### [Other examples of film molded article and film packaged body]

Hereinafter, other examples of the above-described film molded article and film packaged body according to the present invention will be described below with reference to Fig. 11A and Fig. 11B to Fig. 15A and Fig. 15B. Note that, in the following description, components the same as the film molded article 1, the film packaged body 11 and the like described above will not be described in detail.

In this embodiment, for example, an elongated film molded article 110 as shown in Fig. 11A and Fig. 11B is formed and folded at a center line C, and the folded halves are superimposed, and thus a film packaged body can be formed. In the film molded article 110 shown in Fig. 11A and Fig. 11B, the embossed portion 3C having a U shape is formed at one area on one end side of a film 112 in a longitudinal direction. Then, in the film molded article 110, in a direction indicated by an arrow B in Fig. 11A, a surface 112a of the film 112 is folded inward, an object to be packaged (not shown) is accommodated in an inside (an accommodating portion), and thus a film packaged body can be formed (refer to Fig. 11B). In this case, peripheral portions on the surface 112a of the film 112 can be sealed by the same method as in the film molded article 1 and the film packaged body 11 described above.

In addition, in this embodiment, for example, like a film molded article 120 shown in Fig. 12A and Fig. 12B, a configuration in which two embossed portions 3D formed in a U shape in plan view are disposed to face each other on one end side from a center line C of a film 122 in a longitudinal direction can be used.

In addition, like a film molded article 130 shown in Fig. 13A and Fig. 13B, a configuration in which two embossed portions 3E formed in a U shape in plan view are disposed to face each other on both end sides with a center line C of a film 132 therebetween in a longitudinal direction, and a total of four embossed portions 3E are included may be used.

Alternatively, like a film molded article 140 shown in Fig. 14A and Fig. 14B, a configuration in which one embossed portion 3E formed in a U shape in plan view is disposed to face each other with a center line C therebetween on both end sides with a center line of a film 142 therebetween in a longitudinal direction may be used.

Further, like a film molded article 150 shown in Fig. 15A and Fig. 15B, a configuration in which two embossed portions 3G formed in a U shape in plan view are disposed to face each other on both end sides of a center line C of a film 152 in a longitudinal direction and two embossed portions 3G disposed in the vicinity of the center line C are adjacent to each other may be used.

According to the film molded articles 110, 120, 130, 140, and 150 shown in Fig. 11A and Fig. 11B to Fig. 15A and Fig. 15B, the elongated films 112, 122, 132, 142, and 152 are folded at the center line C to form the film packaged body. Accordingly, since the number of elements is reduced, it is possible to improve productivity and reduce a manufacturing cost.

### [Effects of the present invention]

Hereinafter, effects obtained when the film molded article 1 of this embodiment is used to form the film packaged body 11 will be described with reference to production examples shown in Fig. 16A to Fig. 16C, and Fig. 17A to Fig. 17C. Fig. 16A, Fig. 16B and Fig. 16C are plan views showing states of the sealed film packaged bodies when a thickness of each object to be packaged is changed in an experiment in which a pair of film molded articles according to this embodiment are superimposed to package the object to be packaged. Fig. 17A, Fig. 17B and Fig. 17C are plan views showing states of the sealed film packaged bodies when an experiment in which a pair of sheet films are superimposed to package an object to be packaged is performed while a thickness of the object to be packaged is changed in the same manner as described above in the related method.

As shown in Fig. 16A to Fig. 16C, in the film packaged body in which a pair of film molded articles in which an embossed portion of this embodiment is provided are superimposed to package an object to be packaged, in any of cases of packaging an object to be packaged having a thickness of 1 mm (Fig. 16A), packaging an object to be packaged having a thickness of 2 mm (Fig. 16B), and packaging an object to be packaged having a thickness of 3 mm (Fig. 16C), wrinkles and the like originating from an accommodating portion formed by deformation of the film molded article are not generated.

On the other hand, as shown in Figs. 17A to 17C, when a film in a sheet state as it is superimposed without performing processing on the film, and an object to be packaged is packaged, wrinkles are not particularly generated in the film when an object to be packaged having a thickness of 1 mm is packaged (Fig. 17A), and when an object to be packaged having a thickness of 2 mm is packaged (Fig. 17B). However, when an object to be packaged having a thickness that is as relatively thick as 3 mm is packaged (Fig. 17C), it can be confirmed that wrinkles S are generated which extend from one area within comers of an accommodating portion that is formed by deformation of a sheet film.

Based on the results of the above production experiment, in the film packaged body 11 in which the pair of film molded articles 1 in which the embossed portion 3 of this embodiment is provided are superimposed to package the object to be packaged 5, it is apparent that it is possible to inhibit generation of wrinkles during sealing.

The configurations in the above-described embodiment and combinations thereof are examples. Additions, omissions, substitutions and other modifications of the configuration can be made without departing from the spirit and scope of the present invention. In addition, the present invention is not limited to the embodiments and the examples, and is limited by only the scope of the appended claims.

### [Reference Signs List]

1, 10, 100, 110, 120, 130, 140, 150 Film molded article
I a Peripheral portion
2, 25, 200, 112, 122, 132, 142, 152 Film
2a, 25a, 200a, 112a, 122a, 132a, 142a, 152a Surface
3, 3A, 3B, 3C, 3D, 3E, 3F, 3G Embossed portion
3a Tip
4, 4A, 4C Enclosed region
4a, 4b Imaginary line
4B Accommodating portion
5 Object to be packaged
11 Film packaged body
20, 30, 40 Punch (mold)
21, 31, 41 Tip portion
50, 60 Mold
51, 61 Protrusion
S Wrinkles

## Claims

1. A film molded article in which a plurality of concave or convex embossed portions disposed apart from each other are formed on a surface of a film,
wherein the plurality of embossed portions are disposed on the surface of the film such that an enclosed region surrounded by the plurality of embossed portions and imaginary lines that connect the plurality of embossed portions is formed.

2. The film molded article according to Claim 1,
wherein the embossed portion has a semicircular shape, a triangular shape, a U shape, a linear shape, a polygonal line shape, a curvilinear shape, a rectangular shape, a circular shape, or a point shape in plan view.

3. The film molded article according to Claim 2,
wherein the embossed portion has a U shape in plan view and a region surrounded by the U shape on the surface of the film is a concave shape or a convex shape.

4. The film molded article according to any one of Claims 1 to 3,
wherein the embossed portion has a shape that changes in multiple stages in a thickness direction from the surface of the film.

5. The film molded article according to any one of Claims 1 to 4,
wherein the film is made of a plastic material capable of adding a shape according to plastic deformation.

6. The film molded article according to any one of Claims 1 to 5,
wherein the film is made of a heat-sealable laminate material.

7. A film packaged body formed by superimposing a pair of the film molded articles according to any one of Claims 1 to 6,
wherein an object to be packaged is disposed in the enclosed region formed on the film molded article, the pair of the film molded articles are superimposed to cover the object to be packaged, and peripheral portions of the film molded articles are sealed.

8. The film packaged body according to Claim 7,
wherein the object to be packaged is a lithium ion secondary battery cell.

9. A method of manufacturing a film molded article by which concave or convex embossed portions are formed on a surface of a film, comprising
causing plastic deformation in the film by adding a shape to at least a part of the surface of the film using a mold, forming a plurality of the embossed portions to be disposed apart from each other on the surface of the film, and securing formation of an enclosed region surrounded by the plurality of embossed portions and imaginary lines that connect the plurality of embossed portions.

10. The method of manufacturing a film molded article according to Claim 9,
wherein the mold includes a punch and a die, and a tip portion in contact with the surface of the film in the punch is formed in a semicircular shape, a triangular shape, or a U shape in plan view, and
wherein a shape is added to the surface of the film using the mold, and thus a plurality of the embossed portions having a semicircular shape, a triangular shape, or a U shape in plan view are formed on the surface of the film.

11. The method of manufacturing a film molded article according to Claim 9,
wherein the mold includes a protrusion in contact with the surface of the film and the protrusion is formed in a U shape in plan view, and
wherein a shape is added to the surface of the film using the mold, and thus a plurality of the embossed portions having a U shape in plan view are formed on the surface of the film by forming a region surrounded by the U shape as a concave shape or a convex shape.

12. A method of manufacturing a film packaged body by superimposing a pair of the film molded articles according to any one of Claims 1 to 6, comprising
disposing an object to be packaged in the enclosed region formed in one film molded article between the pair of film molded articles,
subsequently, superimposing the other film molded article on the one film molded article while the object to be packaged is covered in the enclosed region formed in the other film molded article, and
subsequently, sealing peripheral portions of the pair of film molded articles.

13. The method of manufacturing a film packaged body according to Claim 12,
wherein a lithium ion secondary battery cell is used as the object to be packaged.

14. A film packaged body obtained by the method according to Claim 12 or 13.
